# EUROPÄISCHE PATENTSCHRIFT

(11) **EP 3 911 555 B1**
(45) Veröffentlichungstag und Bekanntmachung des Hinweises auf die Patenterteilung: **03.01.2024**
(21) Anmeldenummer: 19832607.6
(22) Anmeldetag: 16.12.2019
(51) Int. Cl.: B62D 15/02, B60W 30/06

(54) **VERFAHREN ZUM TRAINIEREN EINER TRAJEKTORIE FÜR EIN FAHRZEUG, SOWIE ELEKTRONISCHES FAHRZEUGFÜHRUNGSSYSTEM**
METHOD FOR TRAINING A TRAJECTORY FOR A VEHICLE, AND ELECTRONIC VEHICLE GUIDING SYSTEM
PROCÉDÉ D'ENTRAÎNEMENT À UNE TRAJECTOIRE POUR UN VÉHICULE, ET SYSTÈME ÉLECTRONIQUE DE GUIDAGE DE VÉHICULE

(30) Priorität: 16.01.2019 DE 102019101040
(43) Veröffentlichungstag der Anmeldung: 24.11.2021
(73) Patentinhaber: Valeo Schalter und Sensoren GmbH, 74321 Bietigheim-Bissingen (DE)
(72) Erfinder: PRINZHAUSEN, Stefanie, 74321 Bietigheim-Bissingen (DE); EWALD, Stefan, 74321 Bietigheim-Bissingen (DE)
(74) Vertreter: Pothmann, Karsten
(86) Internationale Anmeldenummer: PCT/EP2019/085313
(87) Internationale Veröffentlichungsnummer: WO 2020/148047

(56) Entgegenhaltungen:
- DE-A1-102011 107 974
- DE-A1-102012 220 052
- DE-A1-102013 015 349
- US-A1- 2013 035 821

## Beschreibung

Ein Aspekt der Erfindung betrifft ein Verfahren zum Trainieren einer Trajektorie für ein Fahrzeug, entlang welcher das Fahrzeug in eine Parkzone fährt. Bei einer Trainingsfahrt wird die Umgebung des Fahrzeugs mit einer ersten Erfassungseinrichtung des Fahrzeugs erfasst. Abhängig davon wird die Trajektorie bestimmt. Ein weiterer Aspekt der Erfindung betrifft ein elektronisches Fahrzeugführungssystem für ein Fahrzeug.

Aus der DE 10 2004 047 130 B4 ist ein Verfahren zur Orientierung einer dynamischen veränderlichen Umgebung von autonomen mobilen Systeme, wie ein selbstlenkendes Fahrzeug, bekannt. Zur Erfassung und Modellierung der dynamisch veränderlichen Umgebung während der Fahrt werden über Sensoren Daten über vorhandene Umgebungselemente erfasst. Die Sensoren können Lasersysteme, Ultraschallsysteme, Radarsysteme und Kamerasysteme sein. Sind vorab bereits Weltmodelldaten vorhanden, so können diese Informationen als initiale Basis genutzt werden, auf der dann die weitere Aktualisierung und Präzisierung erfolgt. Zur Umwelterfassung und Modellierung startet das mobile System von einem beliebigen Ausgangspunkt zu einem vorgegebenen Zielpunkt entlang einer ersten freien Wegstrecke, welche beispielsweise durch die dafür vorgesehenen Sensoren, wie sie genannt wurden, detektiert wird. Alternativ kann in einer Trainingsfahrt das mobile System auch durch einen Fahrer gesteuert werden oder nur vorgegebene Trajektorien abfahren, sodass eine lokale Wegeplanung praktisch entfällt und nur die weiteren Prozessschritte zur Umwelterfassung und Modellierung durchgeführt werden müssen. Bei dem bekannten Verfahren werden somit die unterschiedlichen Sensoren bei den jeweiligen Szenarien umfänglich verwendet, was jedoch dazu führt, dass aufgrund der unterschiedlichen Funktionstypen dieser Sensoren eingeschränkt Informationen über die Umgebung erhalten werden können oder auch nicht-taugliche Informationen vorliegen. Dies beeinträchtigt das Trainingsszenarium wesentlich. Da unterschiedliche Funktionstypen dieser Sensoren unterschiedlichen Funktionsszenarien unterliegen, kann die pauschale Verwendung derartig vielfältiger unterschiedlicher Sensoren nur ein bedingt taugliches Ergebnis zu Informationen für das Trainingsszenario liefern.

Darüber hinaus ist aus der DE 10 2013 015 349 A1 ein Verfahren bekannt, welches selbstlernend ist und bei welchem nach wiederholtem Parken in ein- und demselben Bereich oder einer Zone diese Zone als eine Heim-Parkzone definiert wird. Beim Anfahren dieser Heim-Parkzone werden geeignete Informationen, wie ermittelte Fahrdaten oder erfasste Umgebungsdaten wie Lenk-/Gierwinkel, Fahrzeuggeschwindigkeit, GPS-Daten und die gefahrene Trajektorie, gespeichert und bereits gespeicherte Fahrdaten beziehungsweise Umgebungsdaten aktualisiert, sodass das Verfahren nachtrainiert werden kann. Als Umgebungsdaten werden auch eine erfasste gefahrene Trajektorie, eine geschätzte voraussichtlich zu fahrende Trajektorie oder Daten der Umgebungssensoren wie Kamerabilder, Ultraschallmessungen, gespeichert oder aktualisiert. Auch hier ist das Trainingsszenario bezüglich der individuell zu verwendenden Informationen von unterschiedlichen Erfassungseinrichtungen unberücksichtigt.

DE 10 2012 220052 A1 zeigt ein Verfahren gemäß Oberbegriff des Anspruchs 1.

Es ist Aufgabe der vorliegenden Erfindung, ein Verfahren zum Trainieren einer Trajektorie für ein Fahrzeug zu schaffen, bei welchem eine bedarfsgerechtere Nutzung der von unterschiedlichen Erfassungseinrichtungen erfassten und zur Verfügung gestellten Informationen erfolgt. Darüber hinaus ist es auch Aufgabe, ein entsprechendes elektronisches Fahrzeugführungssystem für ein Fahrzeug zu schaffen.

Die Aufgabe wird durch ein Verfahren und ein elektronisches Fahrzeugführungssystem gemäß den unabhängigen Ansprüchen gelöst.

Ein Aspekt der Erfindung betrifft ein Verfahren zum Trainieren einer Trajektorie für ein Fahrzeug, entlang welcher das Fahrzeug in eine Parkzone fährt. Bei einer Trainingsfahrt wird die Umgebung des Fahrzeugs mit einer ersten Erfassungseinrichtung des Fahrzeugs erfasst. Die erste Erfassungseinrichtung stellt bezüglich einer Erfassungsart und/oder eines Erfassungszustands der Erfassungseinrichtung und/oder der Position der Erfassungseinrichtung am Fahrzeug und/oder der Orientierung des Erfassungsbereichs der Erfassungseinrichtung am Fahrzeug einen ersten Funktionstyp dar. Abhängig von den durch die erste Erfassungseinrichtung erfassten Informationen wird die Trajektorie bestimmt. Sie kann für ein nachfolgendes Fahren des Fahrzeugs in die Parkzone zugrunde gelegt werden.

Bei einer auf die Trainingsfahrt nachfolgenden Nachfahrfahrt des Fahrzeugs, bei welcher das Fahrzeug zumindest bereichsweise bis zur Parkzone fährt, wird mit einer zweiten Erfassungseinrichtung des Fahrzeugs, die einen bezüglich der Erfassungsart und/oder einem erfassten Zustand und/oder einer Position am Fahrzeug und/oder einer Orientierung des Erfassungsbereichs der zweiten Erfassungseinrichtung am Fahrzeug einen zum ersten Funktionstyp unterschiedlichen zweiten Funktionstyp darstellt, die Umgebung des Fahrzeugs erfasst. Die Trajektorie wird zumindest abhängig von den durch die zweite Erfassungseinrichtung bei der zumindest einen Nachfahrfahrt erfassten Informationen aktualisiert. Durch dieses Trainingsszenario werden bei unterschiedlichen Fahrten, nämlich einerseits der Trainingsfahrt und andererseits der dazu unterschiedlichen und zeitlich nachfolgenden zumindest einen Nachfahrfahrt unterschiedliche Informationen von unterschiedlichen Erfassungseinrichtungen zugrunde gelegt, um dann zu beurteilen, ob eine Aktualisierung und somit auch Korrektur der Trajektorie erforderlich ist. Da unterschiedliche Funktionstypen von Erfassungseinrichtungen bei unterschiedlichen Gegebenheiten eine unterschiedliche Tauglichkeit bezüglich der Erfassung aufweisen, wird diesem Aspekt hier Rechnung getragen. Hiermit wird das Trainingsszenario verbessert und eine genauere und schnellere Bestimmung einer optimalen Trajektorie ermöglicht.

Insbesondere ist es somit ermöglicht, dass beim trainierten Parken ein Lokalisierungsverfahren zugrunde gelegt wird, um die genaue Position des Fahrzeugs bezüglich der Szene und somit bezüglich der Umgebung während des zumindest semiautonomen Fahrens zu bestimmen. Insbesondere werden durch dieses Verfahren und dieses Trainieren der Trajektorie, das auch eine Lokalisierung des Fahrzeugs bezüglich der Umgebung darstellt, Informationen aus einem vorherigen Trainingsmanöver beziehungsweise einer vorhergehenden Trainingsfahrt genutzt. Diese Trainingsfahrt kann sowohl manuell und somit vollständig durch den Fahrzeugführer geführt erfolgen. Es kann jedoch auch zumindest semiautonom erfolgen. Die Nachfahrfahrt kann manuell oder zumindest semiautonom erfolgen.

Eine Erfassungseinrichtung kann bezüglich der Erfassungsart unterschiedlich sein. In dem Zusammenhang kann beispielsweise ein Ultraschallsensor oder ein Radarsensor oder ein optischer Sensor, wie beispielsweise ein Lidar-Sensor oder eine Kamera, genannt werden, die alles Erfassungseinrichtungen mit bezüglich der Erfassungsart unterschiedliche Funktionstypen darstellen. Bezüglich des Erfassungszustands kann beispielsweise eine Situation gesehen werden, bei welcher die Erfassungseinrichtung uneingeschränkt zur Detektion vorliegt. Es kann jedoch auch ein zumindest teilweise eingeschränkter Zustand vorliegen, beispielsweise auf einer Linse einer Kamera oder auf einer Membran eines Ultraschallsensors oder auf dem Radarsensor ein Belag wie beispielsweise eine Verschmutzung oder dergleichen vorhanden sein. Auch andere Beeinträchtigungen des Erfassungszustands, die beispielsweise aufgrund von Umgebungseinflüssen wie Temperatur oder Wettersituation vorliegen können, ergeben diesbezügliche Kategorisierungen. Da auch bekannt ist, dass Erfassungseinrichtungen an unterschiedlichen Positionen und somit Orten am Fahrzeug verbaut sein können, beispielsweise an einem frontseitigen Stoßfänger oder an einem hinteren Stoßfänger oder an Seitenbereichen oder an der Windschutzscheibe oder an der Heckscheibe, ergeben sich auch hieraus unterschiedliche Funktionstypen. Ebenso ist es zusätzlich oder anstatt dazu möglich, dass die Erfassungsrichtung und somit die Orientierung des Erfassungsbereichs einer Erfassungseinrichtung relativ zum Fahrzeug unterschiedlich ist. So können Erfassungseinrichtungen mit ihrem Erfassungsbereich bezüglich einer Längsachse des Fahrzeugs nach vorne orientiert sein oder nach hinten orientiert sein. Auch ein zur Seite Orientieren ist möglich. Auch dadurch können sich diesbezüglich unterschiedliche Funktionstypen ergeben. Aufgrund dieser unterschiedlichen Konstellationen betreffend die Funktionstypen eignen sich Erfassungseinrichtungen nur eines Funktionstyps nicht, um alle Gegebenheiten bei einem derartigen Trainingsszenario und somit eine Umgebung vollständig und bestmöglich zu erfassen. Durch das vorgeschlagene Verfahren wird diesen Einschränkungen entgegengewirkt und dadurch eine individuellere Trainingsmethode geschaffen.

Die Lokalisierung, wie sie oben genannt wird, kann somit mit verschiedenen Erfassungseinrichtungen durchgeführt werden. Insbesondere werden jedoch abhängig von spezifischen Fahrsituationen während der Trainingsfahrt einerseits und der Nachfahrfahrt anderseits nur Informationen, insbesondere vorrangig, von ganz spezifischen jeweiligen Erfassungseinrichtungen berücksichtigt, um beurteilen zu können, ob die Trajektorie aktualisiert wird oder nicht.

Ein in dem Zusammenhang somit auch vorteilhafter Aspekt ist es, dass bei den unterschiedlichen Fahrten, nämlich der Trainingsfahrt einerseits und der zumindest einen Nachfahrfahrt anderseits, abhängig von individuellen Bedingungen während dieser einzelnen Fahrten, dann unterschiedliche Informationen von unterschiedlichen Erfassungseinrichtungen berücksichtigt werden, um die gegebenenfalls vorzunehmende Aktualisierung dann auch tatsächlich vorzunehmen.

Es kann in einer vorteilhaften Ausführung vorgesehen sein, dass insbesondere bei der Nachfahrfahrt die Umgebung zumindest zweitweise sowohl mit der ersten Erfassungseinrichtung als auch mit der zweiten Erfassungseinrichtung erfasst wird. Insbesondere kann dabei zumindest zeitweise gleichzeitig ein Erfassen mit der ersten Erfassungseinrichtung und der zweiten Erfassungseinrichtung durchgeführt werden. Insbesondere wird dabei ein zumindest zeitweise gleichzeitiges Erfassen von gleichen und/oder unterschiedlichen Umgebungsbereichen der Umgebung mit zwei vom Funktionstyp unterschiedlichen Erfassungseinrichtungen durchgeführt. Dadurch kann dann auch ein Vergleichen der erfassten Informationen erfolgen. Wird bei einer möglichen Ausführung bei der Nachfahrfahrt nur mit der zweiten Erfassungseinrichtung erfasst, ist keine Lokalisierung gegeben, da mit der ersten Erfassungseinrichtung nicht erfasst wird oder die Informationen ersten Erfassungseinrichtung nicht berücksichtigt werden. Insbesondere erfolgt bei diesem Durchführen der Nachfahrfahrt diese Nachfahrfahrt basierend auf der Odometrieinformationen des Kraftfahrzeugs.

In vorteilhafter Weise ist vorgesehen, dass sich die Trainingsfahrt und die Nachfahrfahrt in zumindest einer Bedingung unterscheiden. Dies kann eine Bedingung des Fahrzeugs selbst sein. Diese Bedingung kann ein den Zustand des Fahrzeugs beschreibender Parameter sein. Insbesondere kann dieser einen Fahrzustand beschreibender Parameter ein Bewegungsparameter des Fahrzeugs sein. Insbesondere wird somit abhängig von zumindest einem derartigen fahrzeugspezifischen Parameter, insbesondere einem Bewegungsparameter, die Auswahl von Informationen, die bei der jeweiligen Fahrt für die Beurteilung der Trajektorie und somit auch einer gegebenenfalls erforderlichen Aktualisierung der Trajektorie, berücksichtigt werden, entschieden. Insbesondere erfolgt somit die Auswahl derjenigen spezifischen Erfassungseinrichtung, deren Informationen für diese Beurteilung der Trajektorie und/oder einer gegebenenfalls erforderlichen Aktualisierung der Trajektorie zugrunde gelegt werden, abhängig von insbesondere diesem zumindest einen fahrzeugspezifischen Parameter, insbesondere dem Bewegungsparameter. Damit wird individuell auf die unterschiedlichen Gegebenheiten bei der Trainingsfahrt und der zumindest einen Nachfahrfahrt eingegangen, um die Beurteilung der Trajektorie diesbezüglich noch genauer durchführen zu können.

Allgemein wird somit abhängig von zumindest einer Bedingung entschieden, bei welcher Fahrt welche Information von welcher der beiden Erfassungseinrichtungen verwendet wird. Abhängig von dieser zumindest einen Bedingung wird entschieden, dass bei der Trainingsfahrt Informationen von einer der beiden Erfassungseinrichtungen für die Bestimmung der Trajektorie zugrunde gelegt werden, und insbesondere die Informationen der anderen Erfassungseinrichtung nicht genutzt werden oder nur nachrangig genutzt werden. Bei der Nachfahrfahrt wird dann abhängig von zumindest einer Bedingung entschieden, dass Informationen insbesondere der anderen Erfassungseinrichtung zugrunde gelegt werden, ob die Trajektorie aktualisiert werden soll oder nicht. Insbesondere werden dabei die Informationen der Erfassungseinrichtung, deren Informationen bei der Trainingsfahrt zur Bestimmung der Trajektorie zugrunde gelegt wurden nicht genutzt oder nur nachrangig genutzt.

Eine Bedingung kann eine fahrzeugspezifische Bedingung, wie beispielsweise eine Geschwindigkeit oder ein Lenkwinkel oder eine Orientierung des Fahrzeugs in der Umgebung sein, oder eine Umgebungsbedingung, wie beispielsweise eine Temperatur, eine Luftfeuchte, Niederschlag, etc., oder eine erfassungseinrichtungsspezifische Bedingung, wie eine Erfassungsart oder ein Erfassungszustand oder eine Position am Fahrzeug oder eine Orientierung des Erfassungsbereichs zum Fahrzeug und/oder zu Objekten in der Umgebung, sein.

Das Fahrzeug fährt bei einer Trainingsfahrt mit einer ersten Geschwindigkeit als fahrzeugspezifische Bedingung und bei der Nachfahrfahrt mit einer zur ersten Geschwindigkeit unterschiedlichen zweiten Geschwindigkeit. Die Geschwindigkeit ist insbesondere ein Beispiel für einen Bewegungsparameter des Fahrzeugs. Die Bewegung des Fahrzeugs mit unterschiedlichen Geschwindigkeiten bei der Trainingsfahrt und der Nachfahrfahrt kann bewusst oder unbewusst erfolgen. Da bei unterschiedlichen Geschwindigkeiten die unterschiedlichen Erfassungseinrichtungen besser oder schlechter funktionieren, insbesondere aufgrund ihrer Erfassungsart und/oder Position am Fahrzeug und/oder der Orientierung des Erfassungsbereichs, kann mit dem vorgeschlagenen Verfahren diesen Limitierungen der unterschiedlichen Erfassungseinrichtungen bestmöglich Rechnung getragen werden. Da spezifische Funktionstypen von Erfassungseinrichtungen bei spezifischen Geschwindigkeiten, insbesondere höheren Geschwindigkeiten, bezüglich der Erfassungsgenauigkeit eingeschränkt sind, kann durch das vorgeschlagene Verfahren insbesondere somit auch abhängig von der jeweiligen Geschwindigkeit des Fahrzeugs bei den unterschiedlichen Fahrten entschieden werden, welche Erfassungseinrichtung dann tauglicher ist und genauere Informationen über die Umgebung und somit die Lokalisierung des Fahrzeugs liefert. Sodass in dem Zusammenhang auch bedarfsgerecht die geeignetsten Informationen der geeignetsten Erfassungseinrichtung genutzt werden.

Die erste Geschwindigkeit wird an die Aufnahmeeigenschaft und somit die Erfassungsart und/oder Position am Fahrzeug und/oder der Orientierung des Erfassungsbereichs der ersten Erfassungseinrichtung angepasst und die zweite Geschwindigkeit an die diesbezügliche Aufnahmeeigenschaft der zweiten Erfassungseinrichtung angepasst. Bei dieser vorteilhaften Ausführung wird somit gezielt die Geschwindigkeit bei den unterschiedlichen Fahrten individuell so eingestellt, dass sie den dann auch gewünschten Erfassungseinrichtungen, die dann jeweils nutzbare Informationen liefern sollen, bestmöglich Rechnung trägt.

Vorzugsweise ist vorgesehen, dass die erste Geschwindigkeit größer oder gleich 30 km/h beträgt. Hierdurch wird ein Trainingsszenario ermöglicht, bei welchem die Trainingsfahrt auch bei relativ hohen Geschwindigkeiten stattfinden kann. Das Trainingsszenario wird somit im Hinblick auf das tatsächliche Bewegungsverhalten eines Kraftfahrzeugs realitätsnäher, sodass das übliche Fortbewegungsverhalten eines Kraftfahrzeugs abgebildet werden kann und somit in dem Zusammenhang keine Einschränkungen mehr hingenommen werden müssen. Gerade bei diesen relativ hohen Geschwindigkeiten, die auch beispielsweise bis zu 40 km/h und auch größer sein können, kann für spezifische Funktionstypen die Genauigkeit der Erfassung der Umgebung, insbesondere spezifischer Objekte in der Umgebung, die dann jedoch die Grundlage der Lokalisierung bilden, nachlassen kann. Um hier dann wiederum bedarfsgerecht die jeweils tauglichen Erfassungseinrichtungen zu verwenden und deren Informationen zu nutzen, um die Trajektorie zu bestimmen sowie gegebenenfalls eine Aktualisierung vorzunehmen, wird das oben vorgeschlagene Verfahren genutzt. Damit wird dann auch für Nachfahrfahrten beziehungsweise sogenannten Wiederhol-Manövern die gewünschte Genauigkeit der Informationserfassung erreicht. Dies ist insbesondere dann vorteilhaft, wenn nicht nur eine einzige Nachfahrfahrt vollzogen werden soll, sondern mehrere Nachfahrfahrten durchgeführt werden.

Insbesondere wird vorgesehen, dass die zweite Geschwindigkeit kleiner 30 km/h beträgt. Es wird also vorgeschlagen, dass sich das Fahrzeug bei der zumindest einen Nachfahrfahrt mit einer niedrigeren Geschwindigkeit als bei der Trainingsfahrt bewegt. Dadurch wird die Genauigkeit des Wiederhol-Manövers verbessert. Eine erneute Aufnahme und Aktualisierung der bei der Trainingsfahrt erhaltenen Trainingsdaten ist dadurch verbessert. Es können auch zusätzliche Informationen von Erfassungseinrichtungen bezüglich einer Objekterkennung entlang des aufgezeichneten Manövers verwendet werden, um dann auch die Lage des Pfads beziehungsweise der Trajektorie zu verifizieren. Es kann vorzugsweise vorgesehen sein, dass bei der Nachfahrfahrt Informationen eines Ultraschallsensors als zweite Erfassungseinrichtung und/oder einer Kamera, die an einer Längsseite des Fahrzeugs angeordnet ist und deren Erfassungsbereich zur Seite orientiert ist, erzeugt werden und für die Aktualisierung der Trajektorie berücksichtigt werden. Da gerade diese spezifischen Typen von Erfassungseinrichtungen und/oder deren Orientierung bei höheren Geschwindigkeiten des Fahrzeugs nur eine bedingte Erfassung von der Umgebung ermöglichen, insbesondere der Umgebungsbereiche seitlich zum Fahrzeug ermöglichen, ist es daher besonders vorteilhaft, wenn deren Informationen bei der Nachfahrfahrt mit geringerer Geschwindigkeit zugrundegelegt werden, da diese Erfassungseinrichtungen unter diesen Bedingungen der Nachfahrfahrt eine hohe Präzision der Detektion ermöglichen.

Vorzugsweise ist vorgesehen, dass bei der Trainingsfahrt Informationen eines optischen Sensors und/oder eines Radarsensors als erste Erfassungseinrichtung erzeugt werden und für die Bestimmung der Trajektorie berücksichtigt werden. Insbesondere können zusätzlich oder anstatt dazu auch Erfassungseinrichtungen genutzt werden, die mit ihren Erfassungsbereichen in Längsrichtung des Fahrzeugs nach vorne und/oder nach hinten orientiert sind. Da auch bei höheren Geschwindigkeiten bezüglich dieser Ausgestaltung eine entsprechende Genauigkeit der Erfassung ermöglicht ist, ist dies bei der Trainingsfahrt mit insbesondere höherer Geschwindigkeit vorteilhaft.

In vorteilhafter Weise können bei der Nachfahrfahrt Umgebungsbedingungen und/oder fahrzeugspezifische Bedingungen berücksichtigt werden. Abhängig von diesen Bedingungen wird entschieden, ob Informationen, die bei der Nachfahrfahrt mit der zumindest zweiten Erfassungseinrichtung erzeugt wurden, zur Aktualisierung der Trajektorie berücksichtigt werden. Damit wird das Trainingsszenario noch genauer und bedarfsgerechter durchgeführt. Es können in dem Zusammenhang als Umgebungsbedingungen eine Temperatur und/oder eine Wetterbedingung und/oder eine Jahreszeit und/oder eine Tageszeit berücksichtigt werden und/oder eine Neigung der Fahrbahn, auf welcher sich das Fahrzeug bewegt, berücksichtigt werden. Auch aufgrund dieser Einflüsse sind individuelle Erfassungseinrichtungen situationsabhängig mehr oder weniger tauglich genaue Informationen zu liefern. Es wird durch dieses zusätzliche Entscheidungskriterium, ob dann deren erfasste Informationen für die Bestimmung der Trajektorie und insbesondere für die Aktualisierung einer Trajektorie berücksichtigt werden, das Trainingsszenario verbessert.

Darüber hinaus kann auch ein erfassungseinrichtungsspezifischer Parameter berücksichtigt werden, um zu entscheiden, ob die dann erfassten Informationen berücksichtigt werden sollen. Beispielsweise kann dies bei einer Kamera die Lichtqualität sein. Es kann auch eine Verschmutzung der Erfassungseinrichtung berücksichtigt werden. Bei einer Verschmutzung kann gegebenenfalls eine zumindest reduzierte Funktionalität der Erfassungseinrichtung auftreten. Es kann somit dann auch abhängig von diesen Bedingungen entschieden werden, ob die erhaltenen Informationen der jeweiligen Erfassungseinrichtungen überhaupt zur Verbesserung des Trainingsszenarios beitragen oder nicht.

In vorteilhafter Weise wird vorgesehen, dass die bei der Nachfahrfahrt durch die ausgewählte, insbesondere zumindest zweite, Erfassungseinrichtung erzeugten Informationen von einem Fahrzeugnutzer bewertet werden und abhängig davon der Fahrzeugnutzer entscheidet, ob diese für die Aktualisierung der Trajektorie berücksichtigt werden. Somit wird die Qualität der abgefahrenen Trajektorie beispielsweise durch den Fahrer durch eine Eingabe für eine Eingabeeinheit eines elektronischen Fahrzeugführungssystems bestätigt. Dadurch ist es ermöglicht, dass nur qualitativ gute Manöver zur Verbesserung der Aufzeichnungsdaten und somit auch der bei der Trainingsfahrt bestimmten Trajektorie verwendet werden. Der Trainingseffekt des elektronischen Fahrzeugführungssystems kann dadurch verbessert werden und schneller optimiert werden.

Vorzugsweise wird die Trajektorie aktualisiert, wenn eine Abweichung zwischen der Trajektorie und einer bei der Nachfahrfahrt durchfahrenen Nachfahr-Trajektorie auftritt. Insbesondere erfolgt eine Aktualisierung, wenn eine Abweichung größer einem Toleranzwert der Zielposition in der Parkzone bei der Trajektorie von der Zielposition in der Parkzone bei der Nachfahr-Trajektorie auftritt. Bei dieser Ausführung wird somit insbesondere bezüglich der Zielposition, die jeweils erreicht wird, ein Vergleich durchgeführt und abhängig davon eine Aktualisierung der bei dem Trainingsszenario erhaltenen Informationen durchgeführt.

Vorzugsweise wird die zumindest eine Nachfahrfahrt zumindest semiautonom, insbesondere vollautonom, durchgeführt.

Ein weiterer unabhängiger Aspekt der Erfindung betrifft ein Verfahren zum Trainieren einer Trajektorie für ein Fahrzeug, entlang welcher das Fahrzeug in eine Parkzone zumindest semiautonom fährt, wobei bei einer Trainingsfahrt die Umgebung des Fahrzeugs mit zumindest einer ersten Erfassungseinrichtung des Fahrzeugs erfasst wird und abhängig davon die Trajektorie bestimmt wird, insbesondere wobei die erste Erfassungseinrichtung bezüglich der Erfassungsart und/oder einem Erfassungszustand und/oder der Position am Fahrzeug und/oder der Orientierung am Fahrzeug () einen ersten Funktionstyp darstellt, der unterschiedlich einem zweiten Funktionstyp einer zweiten Erfassungseinrichtung des Fahrzeugs ist, wobei bei der Trainingsfahrt zumindest abhängig von zumindest einer Bedingung, insbesondere zumindest einer fahrzeugspezifischen Bedingung und/oder einer Umgebungsbedingung und/oder einer erfassungseinrichtungsspezifischen Bedingung, entschieden wird, ob auf Basis der Informationen der ersten Erfassungseinrichtung oder auf Basis der Informationen der zweiten Erfassungseinrichtung die Trajektorie bestimmt wird, und bei einer auf die Trainingsfahrt folgenden Nachfahrfahrt, bei welcher das Fahrzeug zumindest bereichsweise bis zur Parkzone fährt, abhängig von zumindest einer, insbesondere der oben genannten, Bedingung, insbesondere zumindest einer fahrzeugspezifischen Bedingung und/oder einer Umgebungsbedingung und/oder einer erfassungseinrichtungsspezifischen Bedingung, entschieden wird, ob, insbesondere dass, die Informationen der zweiten Erfassungseinrichtung für eine Beurteilung zu Grunde zu legen sind, und ob abhängig von diesen Informationen die Trajektorie aktualisiert wird.

Insbesondere wird die Trainingsfahrt mit zumindest einem Wert zumindest einer Bedingung charakterisiert beziehungsweise durchgeführt, der unterschiedlich zum Wert bei der Nachfahrfahrt ist, wobei abhängig von dieser zumindest einen Bedingung beziehungsweise den Werten entschieden wird, welche Informationen von welcher Erfassungseinrichtung bei welcher der jeweiligen Fahrten berücksichtigt wird. Insbesondere dass die Trajektorie zumindest vorrangig und/oder hauptsächlich, insbesondere nur auf Basis der Informationen der ersten Erfassungseinrichtung bestimmt wird, und eine potenzielle Aktualisierung der Trajektorie zumindest vorrangig und/oder hauptsächlich, insbesondere nur, auf Basis der dazu unterschiedlichen Informationen der zweiten Erfassungseinrichtung beurteilt wird.

Ausführungen des ersten unabhängigen Aspekts der Erfindung sind als vorteilhafte Ausführungen des weiteren unabhängigen Aspekts anzusehen.

Ein weiterer Aspekt der Erfindung betrifft ein elektronisches Fahrzeugführungssystem für ein Fahrzeug, mit zumindest einer ersten Erfassungseinrichtung und zumindest einer zweiten Erfassungseinrichtung, und einer Auswerteeinheit. Das elektronische Fahrzeugführungssystem ist zum Durchführen eines Verfahrens gemäß dem oben genannten Aspekt oder einer vorteilhaften Ausgestaltung davon ausgebildet. Insbesondere wird dieses Verfahren mit dem elektronischen Fahrzeugführungssystem durchgeführt.

Ein weiterer Aspekt der Erfindung betrifft ein Fahrzeug, insbesondere Kraftfahrzeug, mit einem elektronischen Fahrzeugführungssystem gemäß dem oben genannten Aspekt.

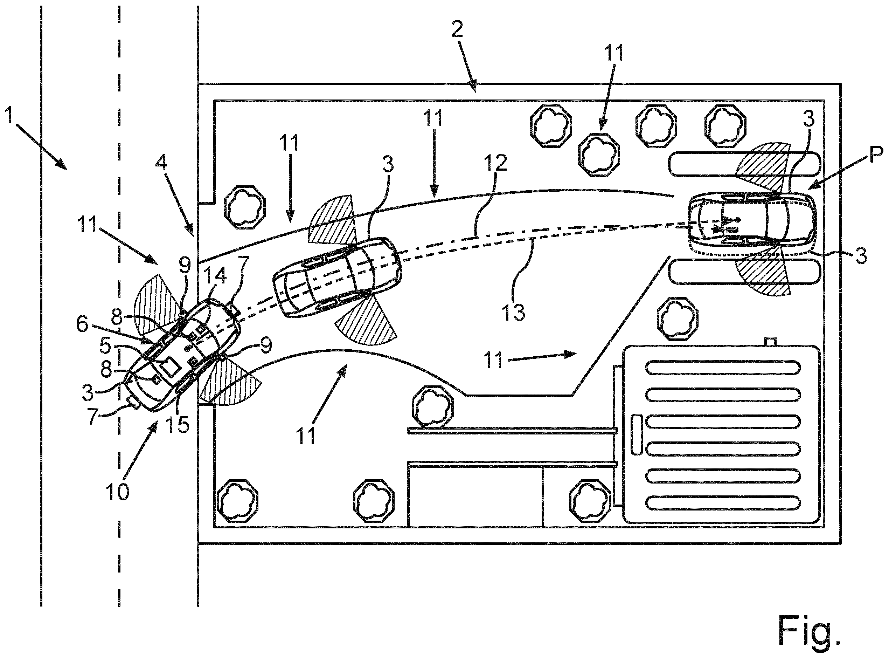

Ausführungsbeispiele der Erfindung werden nachfolgend anhand schematischer Zeichnungen einer Figur näher erläutert. Es zeigen:
Die einzige Fig. zeigt eine beispielhafte Draufsicht auf eine Umgebung mit einer Parkzone und einem Fahrzeug, welches sich in die Parkzone bewegt.

In der Fig. ist eine Fahrbahn 1 gezeigt, an welcher beispielsweise ein Grundstück 2 angrenzt. In diesem Grundstück 2 ist eine Parkzone P ausgebildet, welche eine Heim-Parkzone sein kann. Die Parkzone P ist bezüglich ihrer Lage und Orientierung auf dem Grundstück 2 dauerhaft gleichbleibend ausgebildet.

Ein Fahrzeug 3, welches hier ein Kraftfahrzeug ist, fährt von der Fahrbahn 1 abzweigend zu der Parkzone P, um dort zu parken. Um zu der Parkzone P zu gelangen, fährt das Fahrzeug 3 über eine ebenfalls ortsfeste und dauerhaft gleichbleibende Einfahrt 4 in das Grundstück 2 ein. Um somit einen möglichst gleichbleibenden Bewegungsweg zwischen der Einfahrt 4 und der Parkzone P zu erhalten, ist es vorzugsweise vorgesehen, diesen Fortbewegungsweg des Fahrzeugs 3 zu trainieren, sodass er möglichst genau und somit auch fehlerfrei durchfahren wird, insbesondere wenn sich das Fahrzeug 3 vollautonom von der Einfahrt 4 zu der Parkzone P bewegt.

Das Fahrzeug 3 weist ein elektronisches Fahrzeugführungssystem 5 auf. Mittels diesem kann zumindest ein semiautonomer Betrieb, insbesondere ein vollautonomer Betrieb, des Fahrzeugs 3 durchgeführt werden. Das elektronische Fahrzeugführungssystem 5 weist eine Erfassungsvorrichtung 6 auf, die eine Mehrzahl und somit zumindest zwei Erfassungseinrichtungen aufweisen kann. Die Erfassungsvorrichtung 6 weist zumindest bezüglich des Funktionstyps zwei unterschiedliche Erfassungseinrichtungen auf. Bezüglich des Funktionstyps kann eine Unterschiedlichkeit der Erfassungseinrichtungen durch die Erfassungsart der Erfassungseinrichtungen und/oder einem Erfassungszustand der Erfassungseinrichtungen und/oder einer Position der Erfassungseinrichtungen am Fahrzeug 3 und/oder eine Orientierung eines Erfassungsbereichs der Erfassungseinrichtungen am Fahrzeug 1 definiert werden. Die Erfassungsvorrichtung 6 weist beispielsweise eine Erfassungseinrichtung 7 auf, die in einem Frontbereich des Fahrzeugs 3 und/oder in einem Heckbereich des Fahrzeugs 3 angeordnet ist und/oder in Richtung einer Längsachse des Fahrzeugs 3 mit dem Erfassungsbereich nach vorne orientiert ist und/oder nach hinten orientiert ist. Diese Erfassungseinrichtung 7 kann beispielsweise eine erste Erfassungseinrichtung 7 sein. Zusätzlich oder anstatt dazu kann das Fahrzeug 3 eine Erfassungseinrichtung 8 aufweisen. Die Erfassungseinrichtung 8 kann beispielsweise im Innenraum des Fahrzeugs 3 angeordnet sein, beispielsweise im oberen Bereich der Windschutzscheibe des Fahrzeugs 3 und/oder im oberen Bereich einer Heckscheibe des Fahrzeugs 3 angeordnet sein. Diese Erfassungseinrichtung 8 kann in vorteilhafter Weise mit ihrem Erfassungsbereich in Längsrichtung des Fahrzeugs 3 nach vorne orientiert sein und/oder nach hinten orientiert sein. Diese Erfassungseinrichtung 8 kann eine erste Erfassungseinrichtung sein.

Das Fahrzeug 3 kann darüber hinaus eine Erfassungseinrichtung 9 aufweisen, die an gegenüberliegenden Längsseiten des Fahrzeugs 3 angeordnet ist. Insbesondere sind diese Erfassungseinrichtungen 9 mit ihren Erfassungsbereichen zur Seite und/oder schräg nach hinten in Bezug zur Längsachse des Fahrzeugs 3 betrachtet orientiert. Diese Erfassungseinrichtung 9 kann beispielsweise eine zweite Erfassungseinrichtung sein.

Die Erfassungseinrichtungen können von ihrer Erfassungsart unterschiedlich sein und beispielsweise Ultraschallsensoren oder Radarsensoren oder Lidarsensoren oder Kameras sein. Das Fahrzeug 3 weist vorzugsweise mehrere Erfassungseinrichtungen auf, die von der Erfassungsart her unterschiedlich sind. Beispielsweise kann die Erfassungseinrichtung 7 mit einem oder mehreren Ultraschallsensoren oder mit einem oder mehreren Radarsensoren und/oder mit einem oder mehreren Lidarsensoren ausgerüstet sein. Die Erfassungseinrichtung 8 kann beispielsweise mit Kameras ausgerüstet sein. Die Erfassungseinrichtung 9 kann mit Kameras ausgerüstet sein.

Um nun den Fortbewegungsweg des Fahrzeugs 3 insbesondere beginnend ab der Einfahrt 4 bis zur Parkzone P trainieren zu können, wird bei einer ersten Trainingsfahrt das Fahrzeug 3 ausgehend von einem vorteilhaften Startpunkt 10 zur Parkzone P hin bewegt. Insbesondere kann diese Trainingsfahrt vollständig manuell durch einen Fahrzeugführer des Fahrzeugs 3 durchgeführt werden. Es kann jedoch auch beispielsweise ein semiautonomes Fortbewegen des Fahrzeugs 3 erfolgen. Bei dieser Trainingsfahrt werden durch eine erste Erfassungseinrichtung, die beispielsweise durch die Erfassungseinrichtungen 7 und/oder 8 gebildet werden, eine Umgebung 11 des Fahrzeugs 3 erfasst. Insbesondere wird diese Trainingsfahrt mit einer Geschwindigkeit des Fahrzeugs 3 größer 30 km/h durchgeführt, beispielsweise auch größer oder gleich 40 km/h durchgeführt. Bei dieser Trainingsfahrt werden dann Informationen derjenigen Erfassungseinrichtung, insbesondere der ersten Erfassungseinrichtung 7 und/oder 8 genutzt, um bei diesen Bedingungen des Fahrzeugs 3 bei der Trainingsfahrt geeignete Informationen über die Umgebung 11 erfassen zu können und entsprechend bereitzustellen. Insbesondere werden somit diejenigen Erfassungseinrichtungen zur Lieferung von Informationen für die Bestimmung der Trajektorie herangezogen, die abhängig von diesem zumindest einen fahrzeugspezifischen Parameter, insbesondere der Bewegungsbedingung, insbesondere der spezifischen Geschwindigkeit, die bestmöglichen Informationen liefern. Dies ist beispielsweise bei der Erfassungseinrichtung 9 unter diesen Bedingungen nicht oder nur eingeschränkt möglich, da die Erfassungsbereiche dieser Erfassungseinrichtung 9 zur Seite hin orientiert sind und somit bei dieser relativ hohen Geschwindigkeit des Fahrzeugs 3 die seitliche Umgebung nur bedingt mit diesen Kameras erfasst werden kann. Insbesondere wird somit durch das elektronische Fahrzeugführungssystem 5 entschieden, dass aufgrund der Geschwindigkeit des Fahrzeugs 3 und/oder der Orientierung der Erfassungseinrichtung 9 in Bezug zur Fortbewegungsrichtung des Fahrzeugs 3 die von der Erfassungseinrichtung 9 bei der Trainingsfahrt erfassten Informationen nicht berücksichtig werden, um die Trajektorie zu bestimmen und somit die Lokalisierung des Fahrzeugs 3 zur Umgebung 11 zu bestimmen.

Zusätzlich oder anstatt dazu kann dann auch noch berücksichtigt werden, wie ein Erfassungszustand einer Erfassungseinrichtung 7, 8, 9 ist. Zusätzlich oder anstatt dazu kann dann auch noch die Position am Fahrzeug 3 und/oder die Orientierung des Erfassungsbereichs der Erfassungseinrichtung 7, 8, 9 berücksichtigt werden, um systemseitig zu entscheiden, von welchen Erfassungseinrichtungen erfasste Informationen genutzt werden, um die Trajektorie 12, die bei der Trainingsfahrt 3 durchfahren wird, zu bestimmen. Durch das elektronische Fahrzeugführungssystem 5 wird somit insbesondere ein intelligentes System bereitgestellt, das abhängig von zumindest einer Bedingung, entscheidet, von welchen Erfassungseinrichtungen Informationen bei der Trainingsfahrt genutzt werden, um die Trajektorie 12 zu bestimmen. In dem Zusammenhang können zusätzlich auch Umgebungsbedingungen wie beispielsweise die Temperatur und/oder eine Wettersituation genutzt werden, um zu entscheiden, ob die erfassten Informationen für die Bestimmung der Trajektorie 12 genutzt werden.

Bei dem in Fig. gezeigten Beispiel, welches jedoch nicht abschließend zu verstehen ist, soll somit dargelegt werden, dass durch den hier relativ begrenzten Erfassungsbereich der insbesondere als Kameras ausgebildeten Erfassungseinrichtungen 9 diese sich für eine Aufzeichnung bei relativ hohen Geschwindigkeiten nur bedingt oder nicht eignen und somit deren Informationen für die Bestimmung der Trajektorie 12 nicht genutzt werden.

Aufgrund der Position und/oder Orientierung der Erfassungsbereiche sind daher die Erfassungseinrichtungen 7 und 8 besser geeignet. Insbesondere dann, wenn deren Erfassungszustand nicht beeinträchtigt ist und somit beispielsweise keine Verschmutzung einer Linse und/oder einer Membran und/oder eines Radarsensors vorliegt, der die Erfassungsfunktion beeinträchtigen würde. Dies kann vorzugsweise überprüft werden.

Bei einer auf die Trainingsfahrt dann nachfolgenden Nachfahrfahrt beziehungsweise einem Wiederhol-Manöver, bei welchem das Fahrzeug 3 wieder vom Startpunkt 10 losfährt und zur Parkzone P fährt, insbesondere zumindest semiautonom, vorzugsweise vollautonom, erfolgt dieses Fortbewegen bei der zumindest einen Nachfahrfahrt mit einer zur Trainingsfahrt unterschiedlichen Bedingung. Insbesondere erfolgt das Fortbewegen des Fahrzeugs 3 hier mit einer zweiten Geschwindigkeit, die unterschiedlich zur ersten Geschwindigkeit bei der Trainingsfahrt ist. Vorzugsweise ist die zweite Geschwindigkeit kleiner als die erste Geschwindigkeit, insbesondere kleiner als 30 km/h. Bei einer derartigen niedrigen Geschwindigkeit ist es dann ermöglicht, dass dann auch zusätzliche Merkmale in direkter Nähe seitlich des Fahrzeugs 3 genau erfasst werden können, wie beispielsweise Bordsteine, Linien, eine Rasenkante und dergleichen, was dann durch die Erfassungseinrichtung 9, die dann eine zweite Erfassungseinrichtung darstellt, ermöglicht ist. Da die Erfassungseinrichtungen 7 und 8 mit ihren Erfassungsbereichen in eine andere Richtung orientiert sind, ist es mit diesen Erfassungseinrichtungen 7, 8 dann nicht oder nur bedingt tauglich möglich, dass links- und rechtsseitig direkt neben und nahe zum Fahrzeug 3 vorhandene Objekte erfasst werden können. Dies ist dann durch die Erfassungseinrichtung 9 ermöglicht. Somit ist es insbesondere bei der Nachfahrfahrt und insbesondere auch aufgrund der Orientierung der Erfassungsbereiche der Erfassungseinrichtung 9 und der reduzierten Geschwindigkeit des Fahrzeugs 3 ermöglicht, auch diese dann sich in unmittelbarer Nähe und seitlich zum Fahrzeug 3 befindlichen Umgebungsbereiche genau zu erfassen. Es werden dann bei dieser zumindest einen Nachfahrfahrt insbesondere diese Informationen der zweiten Erfassungseinrichtung 9 für die Beurteilung berücksichtigt, ob die Trajektorie 12, wie sie bei der Trainingsfahrt gefahren wurde, aktualisiert wird. Wie in der Fig. zu erkennen ist, durchfährt das Fahrzeug 3 in der Nachfahrfahrt eine Nachfahr-Trajektorie 13, die im Beispiel von der Trajektorie 12 abweicht. Insbesondere ist hier beispielhaft auch zu erkennen, dass eine Zielposition des Fahrzeugs 3 in der Parkzone P und somit eine Endposition bei der Trainingsfahrt von der Endposition bei der Nachfahrfahrt abweicht. In dem Zusammenhang ist die Endposition des Fahrzeugs 3 bei der Trainingsfahrt gestrichelt dargestellt.

Die Daten bei der Trainingsfahrt und somit die Trajektorie 12 wird insbesondere dann aktualisiert, wenn eine Abweichung zwischen der Trajektorie 12 und der Nachfahr-Trajektorie 13 auftritt, insbesondere eine Abweichung größer einem Toleranzwert auftritt. Ein Toleranzwert kann beispielsweise durch den Abstand der Trajektorien 12, 13 und/oder der Anzahl der Kreuzungspunkte der Trajektorien 12, 13 und/oder der Krümmungen der Trajektorien 12, 13 gebildet sein. Insbesondere erfolgt eine Aktualisierung dann, wenn eine Abweichung der Endposition des Fahrzeugs 3 in der Parkzone P bei der Trajektorie 12 von der Endposition in der Parkzone P bei der Nachfahr-Trajektorie 13 auftritt. Gerade bei der zumindest einen Nachfahrfahrt, welche unter zumindest einer definierten unterschiedlichen Bedingung wie die Trainingsfahrt vollzogen wird, insbesondere mit reduzierter Geschwindigkeit vollzogen wird, können die Abstände des Fahrzeugs 3 zu statischen Objekten in der Umgebung 11, die auch besonders nahe am Fahrzeug 3 sich befinden, verbessert aufgezeichnet werden, beispielsweise auch insbesondere durch Ultraschallsensoren.

Die Informationen können in einer Umgebungskarte gespeichert werden. Dort können auch die Objektdaten für beispielsweise Trajektorienverbesserung und objektabhängige Geschwindigkeitsprofile abgespeichert werden.

Auch ist es durch dieses Szenario ermöglicht, häufige Wechsel von Merkmalen und somit Objekten in der Umgebung 11 verbessert zu erfassen, wie dies beispielsweise bei einer mäandrierenden Allee der Fall ist. Derartiges kann bei niedrigeren Geschwindigkeiten des Fahrzeugs 3 verbessert erfasst werden, da in dem Zusammenhang eine sehr hohe Objektdichte mit erhöhter Genauigkeit erfasst werden kann.

Es kann auch vorgesehen sein, dass ein Fahrzeugnutzer entscheidet, ob insbesondere die bei der Nachfahrfahrt erfassten Informationen für die Aktualisierung der Trajektorie 12 berücksichtigt werden sollen. Dies kann beispielsweise durch Eingabe in eine Eingabeeinheit 14 des Fahrzeugs 1 erfolgen.

## Patentansprüche

1. Verfahren zum Trainieren einer Trajektorie (12) für ein Fahrzeug (3), entlang welcher das Fahrzeug (3) in eine Parkzone (P) fährt, wobei bei einer Trainingsfahrt die Umgebung (11) des Fahrzeugs (3) mit einer ersten Erfassungseinrichtung (7, 8, 9), die bezüglich der Erfassungsart und/oder einem Erfassungszustand und/oder der Position am Fahrzeug und/oder der Orientierung am Fahrzeug (3) einen ersten Funktionstyp darstellt, des Fahrzeugs (3) erfasst wird und abhängig davon die Trajektorie (12) bestimmt wird,
wobei bei einer auf die Trainingsfahrt folgenden Nachfahrfahrt, bei welcher das Fahrzeug (3) zumindest bereichsweise bis zur Parkzone (P) fährt, mit einer zweiten Erfassungseinrichtung (7, 8, 9) des Fahrzeugs (3), die einen bezüglich der Erfassungsart und/oder einem Erfassungszustand und/oder der Position am Fahrzeug (3) und/oder der Orientierung am Fahrzeug (3) zum ersten Funktionstyp unterschiedlichen zweiten Funktionstyp darstellt, die Umgebung (11) erfasst wird, wobei die Trajektorie (12) abhängig von den durch die zweite Erfassungseinrichtung (7, 8, 9) erfassten Informationen aktualisiert wird, **dadurch gekennzeichnet, dass** das Fahrzeug (3) bei der Trainingsfahrt mit einer ersten Geschwindigkeit als fahrzeugspezifische Bedingung fährt und bei der Nachfahrfahrt mit einer zur ersten Geschwindigkeit als fahrzeugspezifische Bedingung unterschiedlichen zweiten Geschwindigkeit als fahrzeugspezifische Bedingung fährt und dass die erste Geschwindigkeit an die Detektionseigenschaft der ersten Erfassungseinrichtung (7, 8, 9) angepasst wird und die zweite Geschwindigkeit an die Detektionseigenschaft der zweiten Erfassungseinrichtung (7, 8, 9) angepasst wird.

2. Verfahren nach Anspruch 1,
**dadurch gekennzeichnet, dass**
die Trainingsfahrt mit zumindest einer Bedingung, insbesondere einem Wert einer Bedingung, durchgeführt wird, die beziehungsweise der bei der Nachfahrfahrt unterschiedlich ist, und abhängig von dieser zumindest einen Bedingung entschieden wird, welche Informationen von welcher Erfassungseinrichtung (7, 8, 9) bei welcher der jeweiligen Fahrten berücksichtigt wird, insbesondere dass die Trajektorie (12) auf Basis der Informationen der ersten Erfassungseinrichtung (7, 8) bestimmt wird und eine potenzielle Aktualisierung der Trajektorie (12) auf Basis der dazu unterschiedlichen Informationen der zweiten Erfassungseinrichtung (9) beurteilt wird.

3. Verfahren nach Anspruch 1 oder 2,
**dadurch gekennzeichnet, dass**
die erste Geschwindigkeit größer oder gleich 30km/h beträgt.

4. Verfahren nach einem der vorhergehenden Ansprüche 1 bis 3,
**dadurch gekennzeichnet, dass**
die zweite Geschwindigkeit kleiner 30 km/h beträgt.

5. Verfahren nach Anspruch 4,
**dadurch gekennzeichnet, dass**
bei der Nachfahrfahrt Informationen eines Ultraschallsensors als zweite Erfassungseinrichtung (9) und/oder eine Kamera, die an einer Längsseite des Fahrzeugs (3) angeordnet ist, erzeugt werden und für die Aktualisierung der Trajektorie (12) berücksichtigt werden.

6. Verfahren nach einem der vorhergehenden Ansprüche,
**dadurch gekennzeichnet, dass**
bei der Trainingsfahrt Informationen eines optischen Sensors und/oder eines Radarsensors als erste Erfassungseinrichtung (7, 8) erzeugt werden und für die Bestimmung der Trajektorie (12) berücksichtigt werden.

7. Verfahren nach einem der vorhergehenden Ansprüche,
**dadurch gekennzeichnet, dass**
Umgebungsbedingungen und/oder fahrzeugspezifische Bedingungen und/oder erfassungseinrichtungsspezifische Parameter zumindest bei der Nachfahrfahrt berücksichtigt werden, wobei abhängig von diesen Bedingungen entschieden wird, ob die Informationen, die bei der Nachfahrfahrt mit der zumindest zweiten Erfassungseinrichtung (9) erzeugt wurden, zur Aktualisierung der Trajektorie (12) berücksichtigt werden.

8. Verfahren nach Anspruch 7,
**dadurch gekennzeichnet, dass**
als Umgebungsbedingungen eine Temperatur und/oder eine Wetterbedingung und/oder eine Jahreszeit und/oder eine Tageszeit berücksichtigt wird und/oder eine Neigung der Fahrbahn, auf welcher sich das Fahrzeug (3) bewegt, berücksichtigt wird.

9. Verfahren nach Anspruch 7 oder 8,
**dadurch gekennzeichnet, dass**
als erfassungseinrichtungsspezifischer Parameter eine Verschmutzung der Erfassungseinrichtung (9) berücksichtigt wird.

10. Verfahren nach einem der vorhergehenden Ansprüche,
**dadurch gekennzeichnet, dass**
die bei der Nachfahrfahrt durch die zumindest zweite Erfassungseinrichtung (9) erzeugten Informationen von einem Fahrzeugnutzer bewertet werden und abhängig davon der Fahrzeugnutzer entscheidet, ob diese für die Aktualisierung der Trajektorie (12) berücksichtigt werden.

11. Verfahren nach Anspruch 10,
**dadurch gekennzeichnet, dass**
eine Bestätigung durch den Fahrzeugnutzer durch eine Eingabe in eine Eingabeeinheit (14) eines elektronischen Fahrzeugführungssystems (5) des Fahrzeugs (3) erfolgt.

12. Verfahren nach einem der vorhergehenden Ansprüche,
**dadurch gekennzeichnet, dass**
die Trajektorie (12) aktualisiert wird, wenn eine Abweichung zwischen der Trajektorie (12) und einer Nachfahr-Trajektorie (13) der Nachfahrfahrt, insbesondere eine Abweichung der Endposition des Fahrzeugs (1) in der Parkzone (P) bei der Trajektorie (12) von der Endposition in der Parkzone (P) bei der Nachfahr-Trajektorie (13), auftritt.

13. Elektronisches Fahrzeugführungssystem (5) für ein Fahrzeug (3), mit zumindest einer ersten Erfassungseinrichtung (7, 8, 9) und zumindest einer zweiten Erfassungseinrichtung (7, 8, 9) und einer Auswerteeinheit (15), wobei das Fahrzeugführungssystem (5) zum Durchführen eines Verfahrens nach einem der vorhergehenden Ansprüche ausgebildet ist.

## Claims

1. Method for training a trajectory (12) for a vehicle (3), along which the vehicle (3) drives into a parking area (P), wherein, during a training drive, the environment (11) of the vehicle (3) is captured using a first capture device (7, 8, 9) of the vehicle (3), which first capture device constitutes a first type of function with respect to the type of capture and/or a capture state and/or the position on the vehicle and/or the orientation on the vehicle (3), and the trajectory (12) is determined on the basis thereof,
wherein, during a subsequent drive which follows the training drive and in which the vehicle (3) drives to at least certain regions of the parking area (P), the environment (11) is captured using a second capture device (7, 8, 9) of the vehicle (3), which second capture device constitutes a second type of function differing from the first type of function with respect to the type of capture and/or a capture state and/or the position on the vehicle (3) and/or the orientation on the vehicle (3), wherein the trajectory (12) is updated on the basis of the information captured by the second capture device (7, 8, 9), **characterized in that** the vehicle (3) drives at a first speed as a vehicle-specific condition during the training drive and drives at a second speed as a vehicle-specific condition which differs from the first speed as a vehicle-specific condition during the subsequent drive, and **in that** the first speed is adapted to the detection property of the first capture device (7, 8, 9) and the second speed is adapted to the detection property of the second capture device (7, 8, 9).

2. Method according to Claim 1,
**characterized in that**
the training drive is carried out with at least one condition, in particular a value of a condition, which is different during the subsequent drive, and this at least one condition is taken as a basis for deciding which information is taken into account from which capture device (7, 8, 9) during which of the respective drives, in particular **in that** the trajectory (12) is determined on the basis of the information from the first capture device (7, 8) and a potential update of the trajectory (12) is assessed on the basis of the different information from the second capture device (9).

3. Method according to Claim 1 or 2,
**characterized in that**
the first speed is greater than or equal to 30 km/h.

4. Method according to any one of the preceding Claims 1 to 3,
**characterized in that**
the second speed is less than 30 km/h.

5. Method according to Claim 4,
**characterized in that**
during the subsequent drive, information is generated by an ultrasonic sensor as the second capture device (9) and/or a camera arranged on a longitudinal side of the vehicle (3) and is taken into account for updating the trajectory (12).

6. Method according to any one of the preceding claims, **characterized in that**
during the training drive, information is generated by an optical sensor and/or a radar sensor as the first capture device (7, 8) and is taken into account for determining the trajectory (12).

7. Method according to any one of the preceding claims, **characterized in that**
environmental conditions and/or vehicle-specific conditions and/or capture-device-specific parameters are taken into account at least during the subsequent drive, wherein these conditions are taken as a basis for deciding whether the information generated during the subsequent drive using the at least second capture device (9) is taken into account for updating the trajectory (12).

8. Method according to Claim 7,
**characterized in that**
a temperature and/or a weather condition and/or a season and/or a time of day is/are taken into account as environmental conditions, and/or an inclination of the road on which the vehicle (3) is moving is taken into account.

9. Method according to Claim 7 or 8,
**characterized in that**
soiling of the capture device (9) is taken into account as a capture-device-specific parameter.

10. Method according to any one of the preceding claims, **characterized in that**
the information generated by the at least second capture device (9) during the subsequent drive is assessed by a vehicle user and, on the basis thereof, the vehicle user decides whether this information is taken into account for updating the trajectory (12).

11. Method according to Claim 10,
**characterized in that**
the vehicle user provides a confirmation by means of an input to an input unit (14) of an electronic vehicle guidance system (5) of the vehicle (3).

12. Method according to any one of the preceding claims, **characterized in that**
the trajectory (12) is updated if there is a deviation between the trajectory (12) and a subsequent trajectory (13) of the subsequent drive, in particular a deviation of the end position of the vehicle (3) in the parking area (P) for the trajectory (12) from the end position in the parking area (P) for the subsequent trajectory (13).

13. Electronic vehicle guidance system (5) for a vehicle (3), having at least one first capture device (7, 8, 9) and at least one second capture device (7, 8, 9) and an evaluation unit (15), wherein the vehicle guidance system (5) is designed to carry out a method according to any one of the preceding claims.

## Revendications

1. Procédé d'entraînement à une trajectoire (12) pour un véhicule (3), le long de laquelle le véhicule (3) se déplace dans une zone de stationnement (P), l'environnement (11) du véhicule (3) étant acquis lors d'un déplacement d'entraînement avec un premier dispositif d'acquisition (7, 8, 9) du véhicule (3), qui représente un premier type de fonction en ce qui concerne le mode d'acquisition et/ou un état d'acquisition et/ou la position au niveau du véhicule et/ou l'orientation au niveau du véhicule (3) et la trajectoire (12) étant déterminée à partir de celui-ci,
l'environnement (11) étant acquis lors d'un déplacement successeur qui suit le déplacement d'entraînement, lors duquel le véhicule (3) se déplace au moins dans certaines zones jusqu'à la zone de stationnement (P), avec un deuxième dispositif d'acquisition (7, 8, 9) du véhicule (3), qui représente un deuxième type de fonction, différent du premier type de fonction, en ce qui concerne le mode d'acquisition et/ou un état d'acquisition et/ou la position au niveau du véhicule (3) et/ou l'orientation au niveau du véhicule (3),
la trajectoire (12) étant mise à jour en fonction des informations acquises par le deuxième dispositif d'acquisition (7, 8, 9), **caractérisé en ce que** le véhicule (3), lors du déplacement d'entraînement, se déplace avec une première vitesse en tant que condition spécifique au véhicule et, lors du déplacement successeur, avec une deuxième vitesse en tant que condition spécifique au véhicule, différente de la première vitesse en tant que condition spécifique au véhicule, et **en ce que** la première vitesse est adaptée à la propriété de détection du premier dispositif d'acquisition (7, 8, 9) et la deuxième vitesse est adaptée à la propriété de détection du deuxième dispositif d'acquisition (7, 8, 9).

2. Procédé selon la revendication 1, **caractérisé en ce que** le déplacement d'entraînement est effectué avec au moins une condition, en particulier une valeur d'une condition, laquelle est différente lors du déplacement successeur, et une décision est prise en fonction de cette au moins une condition à propos de quelles informations de quel dispositif d'acquisition (7, 8, 9) sont prises en compte lors duquel des déplacements respectifs, notamment **en ce que** la trajectoire (12) est déterminée sur la base des informations du premier dispositif d'acquisition (7, 8) et une actualisation potentielle de la trajectoire (12) est évaluée sur la base des informations différentes de celles-ci du deuxième dispositif d'acquisition (9).

3. Procédé selon la revendication 1 ou 2, **caractérisé en ce que** la première vitesse est égale ou supérieure à 30 km/h.

4. Procédé selon l'une des revendications 1 à 3, **caractérisé en ce que** la deuxième vitesse est inférieure à 30 km/h.

5. Procédé selon la revendication 4, **caractérisé en ce que** lors du déplacement successeur, les informations d'un capteur à ultrasons en tant que deuxième dispositif d'acquisition (9) et/ou d'une caméra, qui est disposée au niveau d'un côté longitudinal du véhicule (3), sont générées et prises en compte pour l'actualisation de la trajectoire (12).

6. Procédé selon l'une des revendications précédentes, **caractérisé en ce que** lors du déplacement d'entraînement, des informations d'un capteur optique et/ou d'un capteur radar en tant que premier dispositif d'acquisition (7, 8) sont générées et prises en compte pour l'actualisation de la trajectoire (12).

7. Procédé selon l'une des revendications précédentes, **caractérisé en ce que** les conditions environnantes et/ou des conditions spécifiques au véhicule et/ou un paramètre spécifique au dispositif d'acquisition sont pris en compte au moins lors du déplacement successeur, une décision étant prise en fonction de ces conditions à propos de la prise en compte ou non, pour l'actualisation de la trajectoire (12), des informations qui ont été générées lors du déplacement successeur avec l'au moins deuxième dispositif d'acquisition (9).

8. Procédé selon la revendication 7, **caractérisé en ce que** les conditions environnantes prises en compte sont une température et/ou des conditions météorologiques et/ou une saison et/ou une heure de la journée et/ou une inclinaison de la chaussée sur laquelle se déplace le véhicule (3) est prise en compte.

9. Procédé selon la revendication 7 ou 8, **caractérisé en ce que** le paramètre spécifique au dispositif d'acquisition pris en compte est un encrassement du dispositif d'acquisition (9).

10. Procédé selon l'une des revendications précédentes, **caractérisé en ce que** les informations générées par l'au moins deuxième dispositif d'acquisition (9) lors du déplacement successeur sont évaluées par un utilisateur de véhicule et l'utilisateur de véhicule décide en fonction de celles-ci si celles-ci doivent être prises en compte pour l'actualisation de la trajectoire (12).

11. Procédé selon la revendication 10, **caractérisé en ce qu'**une confirmation par l'utilisateur de véhicule est effectuée par une saisie dans une unité de saisie (14) d'un système de conduite de véhicule (5) du véhicule (3).

12. Procédé selon l'une des revendications précédentes, **caractérisé en ce que** la trajectoire (12) est actualisée lorsqu'un écart se produit entre la trajectoire (12) et une trajectoire successeur (13) du déplacement successeur, notamment un écart entre la position finale du véhicule (1) dans la zone de stationnement (P) lors de la trajectoire (12) et la position finale dans la zone de stationnement (P) lors de la trajectoire successeur (13).

13. Système de conduite de véhicule (5) électronique pour un véhicule (3), comprenant au moins un premier dispositif d'acquisition (7, 8, 9) et au moins un deuxième dispositif d'acquisition (7, 8, 9) et une unité d'interprétation (15), le système de conduite de véhicule (5) étant configuré pour mettre en œuvre un procédé selon l'une des revendications précédentes.
